Europäisches Patentamt

European Patent Office

Office européen des brevets

(11) Publication number: **0 503 492 A2**

# EUROPEAN PATENT APPLICATION

(21) Application number: **92103832.9**

(51) Int. Cl.⁵: **F16K  1/22**

(22) Date of filing: **06.03.92**

(30) Priority: **08.03.91 JP 43331/91**

(43) Date of publication of application:
**16.09.92 Bulletin  92/38**

(84) Designated Contracting States:
**DE FR GB**

(71) Applicant: **MATSUSHITA ELECTRIC
INDUSTRIAL CO., LTD.
1006, Oaza Kadoma
Kadoma-shi, Osaka-fu, 571(JP)**

(72) Inventor: **Maruyama, Teruo
18-40, Nagisaminami-cho
Hirakata-shi, Osaka-fu(JP)**

Inventor: **Tanaka, Takashi
6-16-4, Kamoi, Midori-ku
Yokohama-shi, Kanagawa-ken(JP)**
Inventor: **Kondo, Yasuhiro
1-11-1, Nagaonishi-machi
Hirakata-shi, Osaka-fu(JP)**
Inventor: **Masuo, Akio
16-27, Akao-cho
Otsu-shi, Shiga-ken(JP)**

(74) Representative: **Eisenführ, Günther, Dipl.-Ing
Eisenführ, Speiser & Partner Martinistrasse
24
W-2800 Bremen 1(DE)**

(54) **Rotary valve.**

(57) A rotary valve includes a first airfoil moving downstream when the valve is opened, a second airfoil moving upstream when the valve is opened, a shaft for supporting the first and second airfoils, a passage for rotatably accommodating the first and second airfoils through the shaft and guiding a fluid, wherein a nozzle portion extending upstream is formed on the first airfoil so that an interval of a fluid path formed between an inner surface of the passage and the nozzle portion varies gently with a change of a valve disk angle of the valve, and/or a nozzle portion extending downstream is formed on the second airfoil so that the interval of the fluid path formed between the inner surface of the passage and the nozzle portion varies gently with the change of the valve disk angle of the valve.

Fig.1

## BACKGROUND OF THE INVENTION

The present invention relates to a rotary valve widely used to open and close a flow passage or control the flow rate at an intermediate position of the passage of the air supply system of an automobile engine, an air-conditioning equipment, plant pipeline, or an evacuating apparatus.

Conventionally, a rotary valve is utilized as the air feeding throttle valve of the automobile engine because the rotary valve has a simple construction and adjusts flow rate easily. The throttle valve is mechanically interlocked with an accelerator stepped by a driver. That is, the force generated by the driver's stepping of the accelerator is directly transmitted to the valve. The force necessary for operating the valve is much smaller than the force required for the driver to step the accelerator. Therefore, there is no difficulty in operating the valve.

But recently, a system having each unit integrated with each other is adopted in an automobile. As such, electronic control technology has been introduced into the inhaling system of an engine in this trend. That is, instead of the conventional mechanism of mechanically connecting the accelerator and the valve with each other, both are disconnected from each other and the opening degree of the valve is optimally controlled according to the driver's intention and the travel condition of the automobile in order to make the driver feel comfortable and improve the combustion efficiency and the acceleration feeling. The characteristic of the valve to be controlled by the accelerator gives a great influence on the entire performance of the control system of the automobile. As such, the improvement of the valve has become a big problem.

The combustion efficiency of the engine can be improved by reducing the number of rotations thereof when the engine idles in such an extent that the engine does not stop. The rotation number of an engine in idling not related to the driving operation of an automobile reduces from 1000rpm to 600rpm, for example, and thus the loss to the rotation number of 400rpm can be eliminated. In this case, it is necessary to maintain the necessary rotation number in such an extent that the engine does not stop.

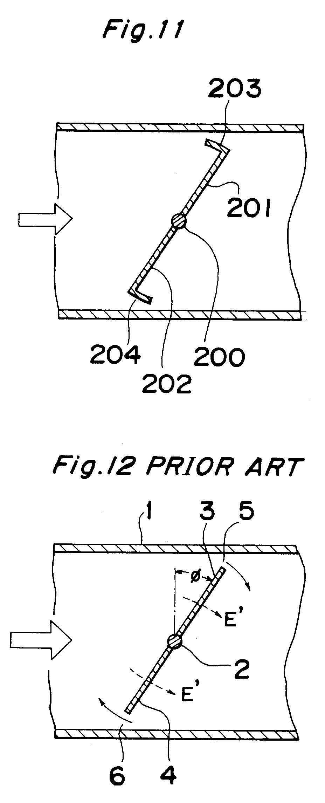

Fig. 12 shows the construction of a conventional rotary throttle valve comprising a valve shaft 2 rotatably mounted at a certain position of a flow passage 1 and flat airfoils 3 and 4 mounted on either side of the shaft 2. The arrow at the left end shows the flow direction. When the passage 1 is closed with the flat airfoils 3 and 4 perpendicular to the flow direction, the flow is interrupted. When the airfoils 3 and 4 rotate clockwise, the valve is opened. According to a conventional method, the throttle valve is used to control the amount of air to be supplied to the engine in the idling of the engine and then, the throttle valve is provided with a bypass port connecting the upstream and downstream sides thereof. When the throttle valve is closed, the bypass port is opened to feed a small amount of air to the engine through the bypass port in such an extent that the engine does not stop. The rotation number at which the engine is stopped is determined according to the extent of load applied to the engine. For example, if the engine is used for an air-conditioner, it is necessary to select a high number of rotations of the engine. In setting the number of rotations of the engine when it idles, it is necessary to select a higher number of rotations than is required depending on the change of a road situation.

In order for the throttle valve to obtain an optimum flow rate without using the bypass valve when the engine idles, it is necessary to control the rotational angle of the shaft thereof with a high accuracy in a small rotational angle range.

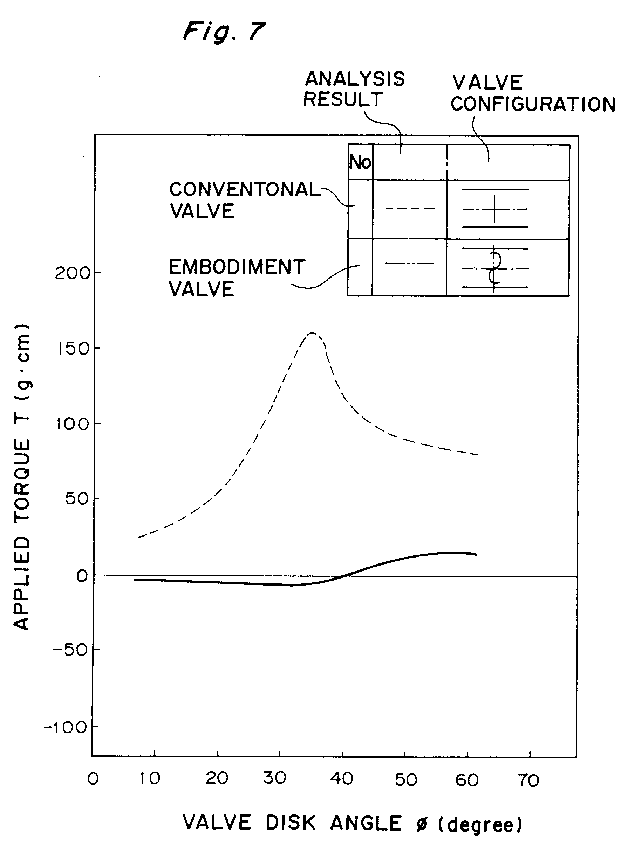

But the following problem must be considered. Referring to the conventional valve shown in Fig. 6 showing the characteristic of flow rate with respect to the rotational angle of the shaft of a conventional throttle valve (butterfly valve), when the rotational angle of the shaft of the throttle valve is in the vicinity of "0", the flow rate is nonlinear and becomes great with a slight increase of the rotational angle. It is necessary to install a pulse motor having a high stepping number or a servo motor using an encoder having a high resolution in order to control the flow rate with a high accuracy in a small rotational angle range. But the adoption of the pulse motor or the servo motor increases manufacturing cost.

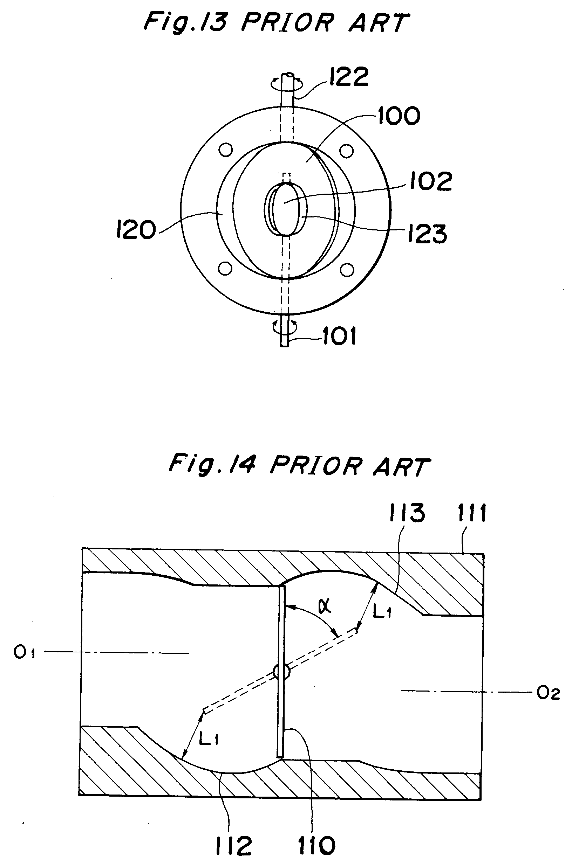

The following proposals have been made to overcome the above-described problem. Referring to Fig. 13 showing a throttle valve, a small diameter circular airfoil 102 provided in the center portion of a large diameter circular airfoil 100 mounted on a shaft 122 is opened or closed by a shaft 101 with the airfoil 100 closed. But the provision of a motor for driving the airfoil 102 and a controller for driving the motor are additionally required. According to a throttle valve of another proposal shown in Fig. 14, curved surfaces 112 and 113 are formed in the inner surface of a cylinder 111 accommodating an airfoil 110 so as to reduce the change of rate of the area of a region between the airfoil 110 and the inner surface of the cylinder 111 with respect to the rotational angle $\alpha$ of the shaft of the throttle valve. But it is difficult to form the curved surfaces 112 and 113 on the inner surface of the cylinder 111 in which the center axis $O_2$ of the passage on the center axis $O_1$ of the passage on the left side in Fig. 14. The area is depended with the length $L_1$.

As described above, according to both proposals, manufacturing cost is high.

## SUMMARY OF THE INVENTION

It is the essential object of the present invention to provide a throttle valve in which flow rate varies gently according to the change of the rotational angle (valve disk angle) of the shaft thereof in a small rotational angle range.

It is another object of the present invention to provide a throttle valve simple in construction and low in cost.

In accomplishing this and other objects of the present invention, according to one aspect of the present invention, there is provided a rotary valve comprising: a first airfoil moving downstream when the valve is opened, a second airfoil moving upstream when the valve is opened, a shaft for supporting the first and second airfoils, a passage for rotatably accommodating the first and second airfoils through the shaft and guiding a fluid, wherein a nozzle portion extending upstream is formed on the first airfoil so that an interval of a fluid path formed between an inner surface of the passage and the nozzle portion varies gently with a change of a valve disk angle of the valve, and/or a nozzle portion extending downstream is formed on the second airfoil so that the interval of the fluid path formed between the inner surface of the passage and the nozzle portion varies gently with the change of the valve disk angle of the valve.

According to the above construction, the upper and/or lower nozzle portions for controlling the flow velocity of fluid are formed on the peripheral portion of the valve. The interval formed between the inner surface of the passage and the nozzle portion varies gently with the change of the rotational angle of the valve shaft.

Since the first airfoil is concave and the second airfoil is convex in the flow direction, pressure is applied to the first and second airfoils uniformly. Thus, the valve shaft can be rotated with a small torque.

## BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:

Fig. 1 is a sectional view of a valve according to a first embodiment of the present invention;

Fig. 2 is a sectional view taken along the line II-II of Fig. 1;

Fig. 3 is a schematic view showing the valve;

Fig. 4 is a perspective view showing the configuration of the valve;

Figs. 5A, 5B, and 5C are respectively views showing the valve in a closed state, a slightly rotated state, and a sufficiently rotated state;

Fig. 6 is a graph showing the relation between flow rate and valve disk angle;

Fig. 7 is a graph showing the relation between applied torque and valve disk angle;

Figs. 8A and 8B are respectively a flow velocity vector diagram and a pressure distribution diagram of the conventional valve;

Figs. 9A and 9B are respectively a flow velocity vector diagram and a pressure distribution diagram of the valve according to the embodiment of the present invention;

Fig. 10 is a graph showing the relation between pressure difference over airfoil and length along airfoil;

Fig. 11 is a sectional view of the second embodiment of the present invention; and

Figs. 12, 13, and 14 are respectively sectional views of the conventional valves.

## DETAILED DESCRIPTION OF THE EMBODIMENTS

Before description of the present invention proceeds, it is to be noted that like parts are designated by like reference numerals throughout the accomplishing drawings.

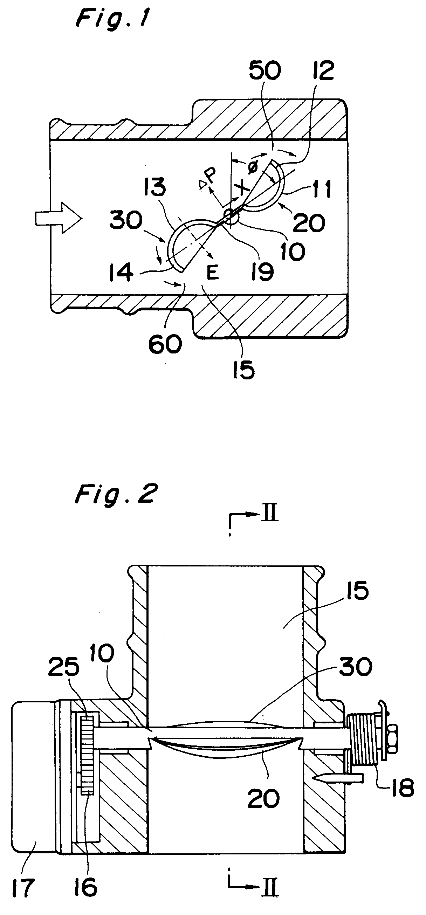

Fig. 1 is a sectional view of a valve according to one embodiment of the present invention. Fig. 2 is a sectional view taken along the line II-II of Fig. 1. The valve comprises a valve shaft 10, a first airfoil 20 including a first curved surface 11 and a first nozzle portion 12; and a second airfoil 30 including a second curved surface 13 and a second nozzle portion 14; and a flat section 19 formed in the vicinity of the shaft 10. The first airfoil 20 and the second airfoil 30 constitute a valve body installed in the center of a passage 15 serving as an air intake cylinder. Reference numerals 50 and 60 shown in Fig. 1 denote a first gap and a second gap. Fluid flows in the direction shown by the arrow shown in the left end of Fig. 1.

Referring to Fig. 2, the shaft 10 is driven by a motor 17 through gears 25 and 16. A return spring 18 mounted on the right end of the shaft 10 urges the shaft 10 so that the return spring 18 closes the valve in emergency.

When the valve body comprising the first and second airfoils 20 and 30 are perpendicular to the passage 15, the valve is closed. With the clockwise rotation of the first and second airfoils 20 and 30, the valve is gradually opened. This basic construction is similar to that of the conventional rotary valve.

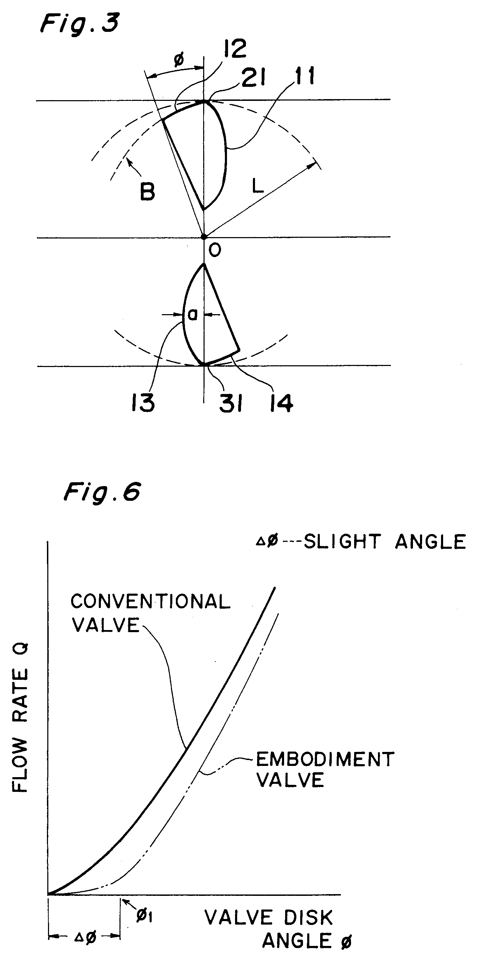

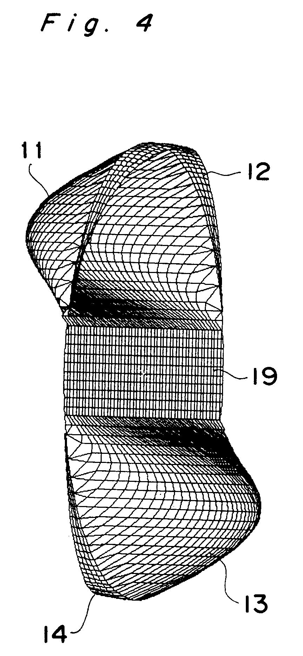

According to this embodiment, the first and second nozzle portions 12 and 14 are formed on the peripheral surfaces of the first airfoil 20 and the second airfoil 30, respectively so that the former extends upstream and the latter extends downstream. The configuration of the first and second nozzle portions 12 and 14 are as follows: As shown in Fig. 3, the peripheral end point 21 of the first airfoil 20 and the peripheral end point 31 of the second airfoil 30 farthest from the shaft 10 form a circle having a radius (L). The first and second nozzle portions 12 and 14 form a part of a curved surface (B), which is enclosed by the circle having the radius (L), in the range of $\Delta\phi$ in Fig. 3. The configuration of the valve body is drawn by computer graphics in Fig. 4 for clarification.

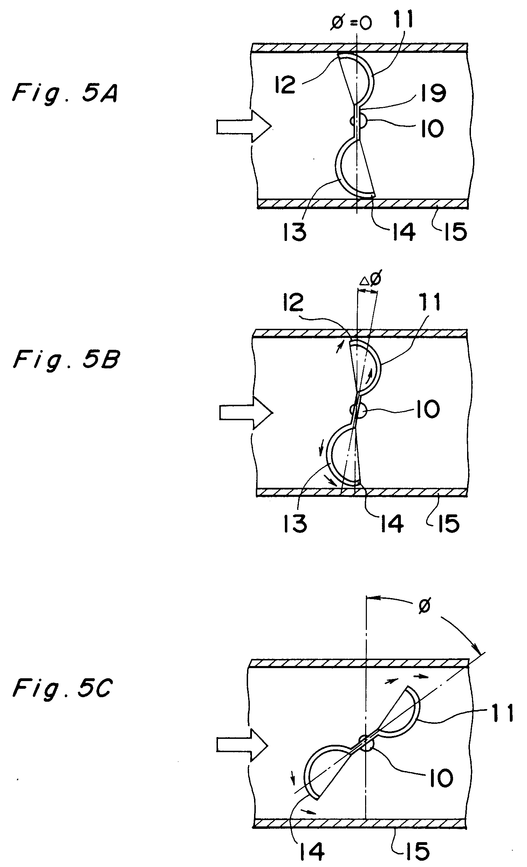

Supposing that the valve disk angle $\phi$ is set as zero when the flat section 19 of the valve body is perpendicular to the flow direction, flow rate Q = 0 and the valve body is closed as shown in Fig. 5A at this time. When the shaft 10 rotates a slight angle $\Delta\phi$ as shown in Fig. 5B, the first and second nozzle portions 12 and 14 reduce the area of a region formed between the inner surface of the intake cylinder of the passage 15 and the first and second airfoils 20 and 30 because the region is partly blocked by the curved surfaces of the first and second nozzle portions 12 and 14. Then, the flow rate is sufficiently reduced. Fig. 5C shows the state in which the valve disk angle $\phi$ of the first and second airfoils 20 and 30 is sufficiently great. The flow rate characteristic can be selected by varying the configuration of the first and second nozzle portions 12 and 14 in a range in which the valve disk angle of the shaft 10 is slight ($0<\phi<\phi_1$). As shown in Fig. 6, the flow rate can be greatly reduced in the range in which the valve disk angle of the shaft 10 is slight. Owing to the advantage described above, the flow rate can be easily controlled by the motor 17 in a small valve disk angle range. Supposing that the valve is driven by a pulse motor, the flow rate can be controlled in a slight degree even though the positioning resolution of the pulse motor is not superior, that is, the number of steps is not large.

According to this embodiment, torque to be applied to the rotating valve body by a fluid in opening the valve can be reduced because of an improved sectional configuration of the first and second airfoils 20 and 30. The first and second airfoils 20 and 30 are sine-curved so that the curved surfaces are projected forward in the rotary direction of the valve body. Therefore, the valve is approximately in the shape of an inverted S.

The mechanism of the valve capable of reducing torque has been numerically analyzed for a planar two-dimensional throttle valve model according to the embodiment of the present invention in comparison with the conventional valve. The opposing walls of the passage are parallel with each other. The condition is as follows on the assumption that the valve is mounted on an automobile.

1. An irreversible change is assumed in consideration of the compressibility of fluid (air).

2. Fluid keeps stagnating on the upstream side of the passage (inlet side).

Pressure $P_\infty$ = 1.013 X 10$^{-6}$ dyn/cm$^2$ (1 atm)
Density $\rho_\infty$ = 1.225 X 10$^{-3}$ g/cm$^3$

3. Fluid is forcibly inhaled at the rate of Q = 2500 l/min from the downstream side of the passage.

4. The valve is positioned $\ell_1$ = 50mm from the inlet disposed in the upstream side of the passage which is 200mm long.

The result of the numerical analysis made in the above condition is described below.

Numerical analysis was made in the above condition on (1) conventional flat throttle valve and (2) throttle valve of the embodiment of the present invention. Description is made on the result of the analysis.

⟨1. Comparison of applied torque characteristic⟩

Fig. 7 shows the relationship between applied torque T and valve disk angle $\phi$ obtained by the analysis of static pressure around the valve performed on the valve (EMBODIMENT VALVE in Fig. 7) comprising the first and second airfoils 20 and 30 according to the first embodiment which have the first and second nozzle portions 12 and 14. According to EMBODIMENT VALVE, as shown in Fig. 3, the a = $\frac{1}{4}$ L where (a) is the length corresponding to the wave crest of the sine curve, and L is the length corresponding to the length of the straight line between the shaft 10 and the end of one of the first and second airfoils 20 and 30. As described previously, Fig. 7 also shows the result obtained by analyzing applied torque characteristic of the conventional valve (CONVENTIONAL VALVE in Fig. 7) in the above-described conditions 1 through 4 described previously.

As shown by the graph of Fig. 7, the applied torque T of the conventional valve shown by the chain line is positive (T>0) at all valve disk angles and has a peak value of T = 160gcm in the vicinity of angle $\phi$ = 35° while the embodiment, as shown by the solid line, is as follows:

(1). When $\phi$ < 40°, T < 0 (valve opening direction) and the negative maximum value of torque: Tmax = -10gcm.

(2). When $\phi > 40°$, $T > 0$ and the positive maximum value of torque: Tmax = 15gcm.

The above result indicates that the absolute value of torque applied to the valve of the embodiment is reduced to 1/10 of the torque applied to the conventional valve and the rate of change of torque applied to the valve is greatly reduced even though the valve disk angle thereof is varied in a great extent.

⟨2. Comparison of flow velocity vector⟩

In order to explain in detail the mechanism of the valve which reduces torque, the result of the analysis obtained by comparing the conventional valve and the valve of the embodiment with each other is described below.

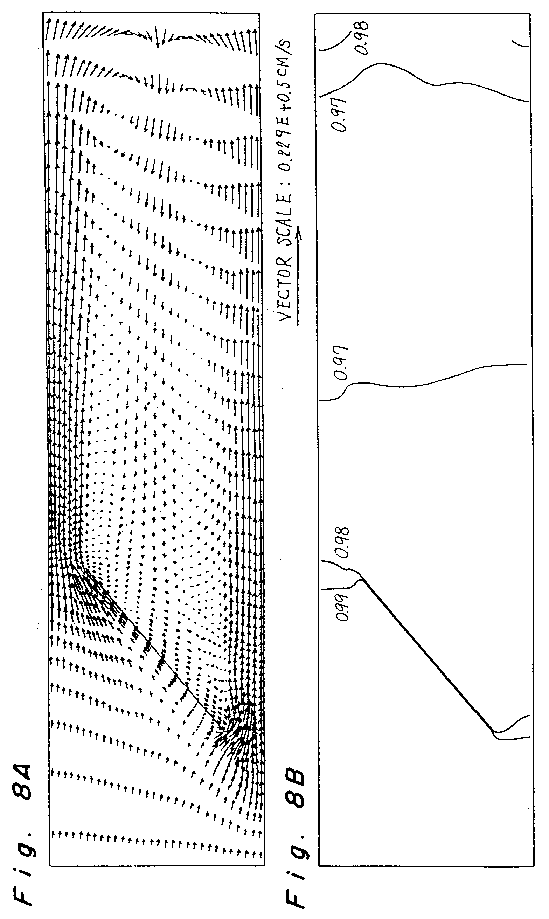

(1). Figs. 8A and 8B show respectively the velocity vector and pressure distribution, of the flow acting on the conventional valve. With regard to the upstream side of the first airfoil 3 of Fig. 12, the velocity vector of the flow over the upper surface of the first airfoil 3 and directed toward the first gap 5 is great because the flow passage is smooth. There is hardly any flow along the upper surface of the second airfoil 4 and directed toward the second gap 6, so that the velocity vector is quite small.

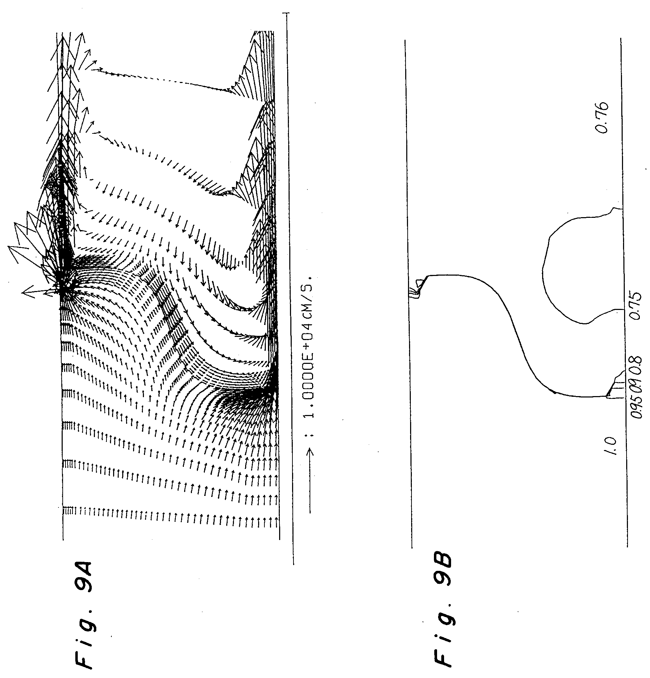

(2). Figs. 9A and 9B show respectively the velocity vector and pressure distribution, of the flow acting on the valve of the embodiment. Concerning the flow on the upstream side of the first airfoil 20 of Fig. 1, the velocity vector of the flow along the upper recessed surface of the airfoil 20 and directed toward the first gap 50 is smaller than the conventional valve in the concaved bottom portion. Regarding the flow along the upper projected surface of the second airfoil 30 and directed toward the second gap 60, the velocity vector thereof is much greater than that on the conventional valve.

According to the result of the above (1) and (2), in the upstream side of the valve, the dynamic pressure applied to the first airfoil 20 of the embodiment is smaller than that applied to the first airfoil 3 of the conventional valve whereas the static pressure applied to the former is larger than that applied to the latter. In the upstream side of the valve, the dynamic pressure applied to the second airfoil 30 of the embodiment is larger than that applied to the second airfoil 4 of the conventional valve whereas the static pressure applied to the former is smaller than that applied to the latter. Therefore, the applied torque can be reduced in the embodiment.

⟨3. Comparison of pressure distribution⟩

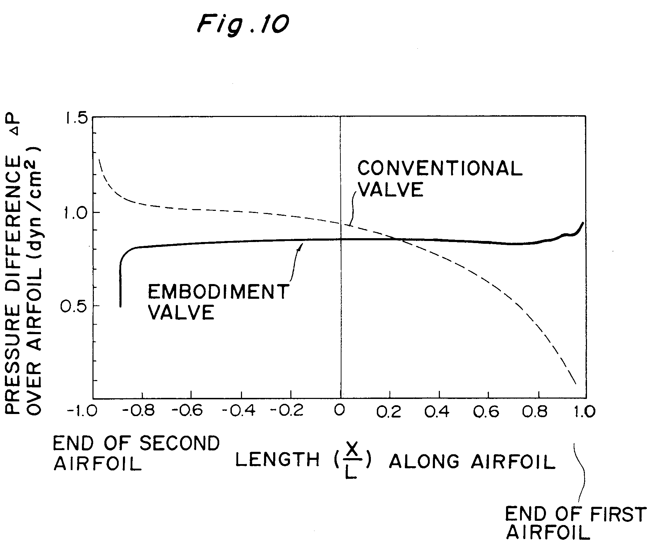

Fig. 10 shows the pressure difference over the airfoils between the valve of the embodiment and the conventional valve. As shown in Fig. 1, x-coordinate is taken along the airfoil surface, the position of the shaft is zero in x-direction, and x-direction toward the first gap 50 is the positive side. The ordinate axis in Fig. 10 is the pressure difference $\Delta P$ between the upstream side and the downstream side of the airfoil. The abscissa axis is $\frac{x}{L}$ and non-dimensional where (L) is the length corresponding to the length of the straight line between the shaft 10 and the end of one of the first and second airfoils 20 and 30.

According to the conventional valve, the pressure difference $\Delta P$ is minimum in the end of the first airfoil and maximum in the end of the second airfoil as shown by the chain line of Fig. 10. As shown in the graph, an unbalanced pressure is applied to the conventional valve about the shaft thereof.

According to the throttle valve of the embodiment, pressure is applied to the first and second airfoils 20 and 30 in an approximately equal degree. The peripheral ends of the first and second nozzle portions 12 and 14 in the embodiment serve as means for reducing the speed of fluid. As a result, the center portion of each airfoil 20 and 30 stagnates fluid.

The throttle valve of the embodiment is in the shape of an inverted S but S-shaped if it is viewed from the base side of a sheet showing Fig. 3.

Other embodiments of the present invention are described below with reference to Fig. 11.

The valve of this embodiment comprises a shaft 200; a first airfoil 201 including a first nozzle portion 203; and a second airfoil 202 including a second nozzle portion 204. As shown in Fig. 11, the first and second airfoils 201 and 202 are flat.

The peripheral ends of the first and second nozzle portions 203 and 204 reduce the flow rate of fluid flowing on the surface of the first and second airfoils 201 and 202, thus reducing dynamic pressure and increasing static pressure. Therefore, the shaft 200 can be rotated with a small torque.

The curved surface of the first airfoil 20 and that of the second airfoil 30 may be formed in a different configuration.

Preferably, the curved surfaces of the first and second airfoils are convexed smoothly along flow, i.e., preferably, the curved surfaces of the first and second airfoils are smoothly curved like a sine curve or a circular arc as shown in Fig. 3. But the curved surfaces thereof can be V-shaped.

The curved surfaces thereof can be partly concaved or convexed. The first and second airfoils 20 and 30 may be formed in rotation symmetry with respect to the shaft 10 as described in the embodiments and alternatively, the concave configuration and the curvature of the airfoils 20 and 30 may be changed. The applied torque T may be changed in accordance with the asymmetrical configuration of the airfoils 20 and 30. One of the first and second airfoils 20 and 30 may be formed in convex configuration toward the valve opening direction. That is, for example, the first airfoil 20 is formed in the convex configuration and the second airfoil 30 is formed in flat, vice versa.

Furthermore, according to the change of the configurations of the airfoils 20 and 30 and the passage 40, the flow in the vicinity of the airfoils 20 and 30 is changed to reduce the applied torque further.

In addition, the first and second airfoils can take the following configurations.

(I). Referring to Fig. 3, the airfoil is curved only in the flow direction and not in the direction perpendicular to the sheet showing Fig. 3.

(II). Referring to Fig. 3, the airfoil is curved in the flow direction and curved like a spoon in the direction perpendicular to the sheet as shown in Fig. 3, i.e., it is deepest in the center thereof.

According to the embodiments of the present invention, the configuration of the above (2) is adopted for the following reason.

As shown in Fig. 4 as one example, the airfoil is curved not only in the flow direction shown by the arrow of Fig. 1, but also with respect to the shaft 10 in the axial direction thereof.

This is to decrease the flow rate of a fluid flow (E) in Fig. 1 passing the peripheral ends of the first and second airfoils 20 and 30 in the vertical direction thereof to the same level as that of the fluid flow formed by the conventional valve as shown by E' of Fig. 12. When the passage 15 is circular, fluid passes the first and second airfoils 20 and 30 through not only the gaps 50 and 60 but also a region between the passage wall and the upper peripheral end of the first airfoil 20 as well as the lower peripheral end of the second airfoil 30 as shown by (E) in Fig. 1. Then, since the first and second airfoils 20 and 30 are curved with respect to the shaft 10 in the axial direction thereof, the flow rate of the fluid passing the first and second airfoils 20 and 30 through the region without being affected by the curved surface thereof is reduced to a great extent. Thus, the valve body can be rotated with a small torque.

The rotary valve according to the present invention can be applied to a rotary valve such as an air feeding throttle valve of an automobile engine, a butterfly valve for controlling flow rate in air-conditioning equipment or chemical plant, a control valve for controlling vacuum pressure in an evacuating apparatus.

As apparent from the foregoing description, according to the rotary valve, the upper and lower nozzle portions for controlling the flow velocity of fluid are formed on the peripheral portions of the valve. The interval formed between the inner surface of the passage and the nozzle portions varies gently with the change of the rotational angle (valve disk angle) of the valve shaft. Then, in the range of the slightly small valve disk angle, the fluid flow can be controlled with high accuracy. Therefore, the valve in the construction of the valve which is simple in that it eliminates the need for the installation of a bypass is capable of reducing the number of rotations of an engine to a necessary minimum degree, which improves combustion efficiency.

In view of the fact that the butterfly valve is used in various fields as a fluid control appliance, the use of the valve of present invention enables an electronic control of the flow rate.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A rotary valve comprising:
   a first airfoil (20,201) moving downstream when the valve is opened;
   a second airfoil (30,202) moving upstream when the valve is opened;
   a shaft (10,200) for supporting the first and second airfoils;
   a passage (15) for rotatably accommodating the first and second airfoils through the shaft and guiding a fluid,
   wherein a nozzle portion (12,203) extending upstream is formed on the first airfoil so that an interval of a fluid path formed between an inner surface of the passage and the nozzle portion varies gently with a change of a valve disk angle of the valve.

2. A rotary valve comprising:
   a first airfoil (20,201) moving downstream when the valve is opened;
   a second airfoil (30,202) moving upstream when the valve is opened;
   a shaft (10,200) for supporting the first and second airfoils;
   a passage (15) for rotatably accommodating the first and second airfoils through the shaft and guiding a fluid,
   wherein a nozzle portion (13,204) extending downstream is formed on the second airfoil so that an interval of a fluid path formed between an inner surface of the passage and the nozzle portion varies gently with a change of a valve disk angle of the valve.

3. The rotary valve as claimed in claim 1, a nozzle portion extending downstream is formed on the second airfoil so that an interval of a fluid path formed between the inner surface of the passage and the nozzle portion varies gently with the change of the valve disk angle of the valve.

4. The rotary valve as claimed in claim 1, wherein a portion including the nozzle portion of the first airfoil is concaved with respect to a flow direction of the fluid and the axial direction of the shaft.

5. The rotary valve as claimed in claim 1, wherein a portion including the nozzle portion of the second airfoil is convexed with respect to a flow direction of the fluid and the axial direction of the shaft.

6. The rotary valve as claimed in claim 4, wherein a portion including the nozzle portion of the second airfoil is convexed with respect to the flow direction and the axial direction of the shaft.

*Fig.1*

*Fig.2*

## Fig.3

## Fig.6

△∅ ---SLIGHT ANGLE

## Fig. 4

Fig. 5A

Fig. 5B

Fig. 5C

## *Fig. 7*

Fig. 8A

VECTOR SCALE : 0.229 E + 0.5 CM/S

Fig. 8B

0.99  0.98    0.97    0.97  0.98

Fig. 9A

$\longrightarrow$ : 1.0000E+04 CM/S.

Fig. 9B

1.0          0.76

0.95 0.9 0.8     0.75

## Fig.10

Fig.11

Fig.12 PRIOR ART

## Fig.13 PRIOR ART

## Fig.14 PRIOR ART